Europäisches Patentamt

European Patent Office

Office européen des brevets

(11) Publication number: **0 397 892**
**A1**

# EUROPEAN PATENT APPLICATION
## published in accordance with Art. 158(3) EPC

(21) Application number: 90900420.2

(22) Date of filing: 01.12.89

(86) International application number:
PCT/SU89/00304

(87) International publication number:
WO 90/06491 (14.06.90 90/14)

(51) Int. Cl.5: **G01C 21/24, B64G 1/40**

(30) Priority: **02.12.88 SU 4608768**

(43) Date of publication of application:
**22.11.90 Bulletin 90/47**

(84) Designated Contracting States:
**DE FR GB IT SE**

(71) Applicant: **INSTITUT KOSMICHESKIKH ISSLEDOVANY AKADEMII NAUK SSSR**
**ul. Profsojuznaya, 84-32**
**Moscow, 117810(SU)**

(72) Inventor: **AVANESOV, Genrikh Aronovich**
**kvartal 32A, 3b-287**
**Novye Cheremushki**
**Moscow, 113209(SU)**
Inventor: **ZIMAN, Yan Lvovich**
**Leninsky pr., 77-2-210**
**Moscow, 117261(SU)**
Inventor: **KOGAN, Alexandr Jurievich**
**ul. Vinogradova, 6-100**
**Moscow, 117133(SU)**
Inventor: **KHEIFETS, Vladimir Naumovich**
**B.Cherkizovskaya ul., 5-6-50**
**Moscow, 107061(SU)**
Inventor: **KRASIKOV, Viktor Alexeevich**
**pr. Mira, 180-164**
**Moscow, 129366(SU)**

(74) Representative: **Crawford, Andrew Birkby**
**A.A. THORNTON & CO. Northumberland**
**House 303-306 High Holborn**
**London WC1V 7LE(GB)**

(54) **METHOD FOR DETERMINING THE COORDINATES OF STARS FOR PREPARATION OF A STAR CATALOGUE.**

(57) A method for determining the coordinates of stars for preparation of a star catalogue provides for recording the coordinates of the stars by means of an astrometric instrument rigidly installed at a desired angle to the longitudinal axis of a space apparatus rotating at a permanent speed about said axis which is oriented towards the sun, while the apparatus is passively stabilized by using sunlight pressure and the dissipation of energy in a viscous liquid. The measurement of star coordinates is re-

peated several times while recording the time moments of the measurements and then the results are processed for determination of the catalogue values of star coordinates.

METHOD FOR DETERMINATION OF STELLAR

COORDINATES FOR DRAWING UP STAR CATALOGUE

## Technical Field

The present invention relates to space engineering and, more particularly, to the methods for determination of stellar coordinates for drawing up a star catalogue.

## Prior Art

Known in the prior part is a method for astrometrical cataloguing of stars by the use of ground-based measuring facilities consisting in measuring the stellar coordinates with relation to the base coordinate reference system (V.V.Podobed et al "General Astrometry", 1982, Nauka, Moscow, pp.79-85).

The known method is noted for a low measuring accuracy caused by distortions due to refraction and turbulence of atmosphere and to the measuring errors of the ground-based facilities.

Another method for determination of stellar coordinates for drawing up a star catalogue consists in that the star images are registered with an astronomical instrument rigidly installed on a space vehicle, then the star coordinates are measured in the instrumental system of coordinates followed by processing of measurement results (ESA, EsA BR-24, June 1985, Ad Astra Hipparcos, pp.17-18).

In this method the star images are registered with the astronomical instrument by scanning the star sky by means of angular motion of the space vehicle. The vehicle is put in spinning motion relative to the selected direction then the angular distances are measured between stars observed by two fields of vision of the astronomical instrument. Continuous manoeuvres of reorientation ensure continuous forward movement of the space vehicle required for overlapping the entire selestial sphere. The results of measurements are processed by a conventional method.

All the above manipulations result in that the mea-

- 2 -

suring information can be received by said method only with the aid of high-precision astronomical instruments which, in turn, renders said method hard to realize.

Besides, this method involves considerable time and equipment for the cycle of observations.

## Summary of the Invention

The main object of the present invention lies in developing a simple method for determining the stellar coordinates for drawing up a star catalogue wherein the star images would be registered with an astronomical instrument in such a way as to permit obtaining the requisite measuring data with minimum expenditures of time and funds for the observation cycle.

This is achieved by providing a method for determining stellar coordinates for drawing up a star catalogue comprising the registering of star images with an astronomical instrument rigidle installed on a space vehicle, measuring the stellar coodrinates in the instrumental coordinate system and processing the results of measurements wherein, according to the invention, the star images are registered with the aid of an astronomical instrument installed on a space vehicle at a preset angle to the longitudinal axis of the vehicle, rotating at a constant angular speed around said axis permanently oriented on the sun, and by passive stabilization of the space vehicle with the use of sun light pressure and dissipation of energy in a viscous liquid, by measuring the stellar coordinates repeatedly in the instrumental coordinate system, by fixing the results of measurement and processing said results by determining the positions of stars in a global system of coordinates at the moments of measurements concurrently with the parameters of angular motion and distortions of the astronomical instrument and parallactic shifts and own movements of stars by their positions in the opposite points of the heliocentric orbit, by reducing the obtained positions of stars to a single moment of time and reducing the plotted global star system to the coordinate system of the catalogue regarded as the basic document.

The disclosed method is simple to realise and allows for a considerable reduction of time for obtaining the requisite measuring data, and of funds for the observation cycle.

Best Mode for Carrying out the Invention

Now the invention will be elucidated by describing its concrete embodiment.

The method for determining stellar coordinates comprises registering the positions of stars with an astronomical instrument rigidly installed on a space vehicle. For this purpose the optical axis of the instrument is oriented orthogonally with respect to the longitudinal axis of the space vehicle which is permanently oriented on the sun. The space vehicle rotates at a constant angular speed relative to the longitudinal axis. Said mode of angular motion of the space vehicle is ensured by the passive means utilizing the force of sunlight pressure for stabilizing the angular position of the space vehicle and using dissipation of energy in a viscous liquid for damping the angular vibrations of the vehicle.

The space vehicle for the realization of the method according to the invention is put into orbit requiring no correction and ensuring negligibly small disturbing moments and absence of cluttering of the astronomical instrument.

Then the stellar coordinates are measured many times in the instrumental system of coordinates, fixing the measuring moments.

Compliance with all the above requirements ensures a high determinancy of the angular motion of the space vehicle and a complete scanning of the sky with the astronomical instrument, overlapping it many times. The measured values are stellar coordinates in the instrumental system of coordinates with recording the moments of observations. By tracking the motion of the sun and moving with

- 4 -

it for half a year the instrument takes photographs the entire star sky.

The determinancy of angular motion permits a definitive fixing of the vehicle position in space at any moment of time by the parameters defining its state at the initial moment of time. The measured quantities are determined both by the inertial star coordinates and by the parameters of angular motion of the instrumental system of coordinates with relation to the inertial system, i.e. by the parameters of angular motion of the vehicle and, in addition, by the measuring noise of the instrument.

The next stage is processing the results of measurements. For this purpose the measured instrumental coordinates of stars are statistically processed and the results of said processing are used for calculating the inertial coordinates of stars at the moments of observations concurrently with the parameters of angular motion and distortions of the astronomical instrument. The positions of stars observed in the opposite points of the heliocentric orbit of the space vehicle are used to determine the parallactic shifts and proper motions of the stars. The calculated positions of stars are reduced to a single moment of time, thus making up a one-stage global stellar system. Then said global stellar system is reduced to the coordinate system of the catalogue adopted as a base document. This produces coordinates for drawing up a star catalogue. All calculations are carried out on the basis of the method of weighed least squares on the basis of a priori information on the accuracy of star positions in the coordinate system of the base catalogue.

The disclosed method for determination of stellar coordinates for drawing up a star catalogue is simple to implement, does not call for the use of active means for guiding the space vehicle in the course of measurements of stellar coordinates, is simple to realize since the required scanning trajectory of the star sky is ensured by the selected mode of orienting and stabilizing the space vehicle

- 5 -

and permits scanning the entire star sky within half a year with the desired accuracy. Measurement of stellar coordinates from the outer space by the realization of the passive measurement method permits solving the problems of developing and maxing a simple and reliable design of the space vehicle for astrometrical measurements with minimum expenditures of funds and time. The expected accuracy of measurements is estimated as 0.01-0.02 angular seconds.

## Industrial Applicability

The method for determination of stellar coordinates can be utilized for astrometrical measurements, particularly for drawing up star catalogues.

- 6 -

CLAIMS

The method for determining stellar coordinates for drawing up a star catalogue comprising registering the star images with an astronomical instrument rigidly installed on a space vehicle, measuring the stellar coordinates in the instrumental coordinate system and processing the measurement results characterized in that the star images are registered with an astronomical instrument installed on a space vehicle at a preset angle to the longitudinal axis of said vehicle which rotates at a constant angular velocity around said axis which is constantly oriented on the sun, said vehicle being passively stabilized with the use of the sunlight pressure and dissipation of energy in a viscous liquid, the stellar coordinates are repeatedly measured in the instrumental system of coordinates, fixing the moments of measurement, and the results of measurements are processed by determining the positions of stars in the global system of coordinates at the moments of measurements concurrently with the parameters of angular motion of the vehicle and distortions of the astronomical instrument, parallactic shifts and proper motions of stars, then the obtained positions of stars are reduced to a single moment of time and the plotted global star system is reduced to the coordinate system of the catalogue adopted as the basic one.

# INTERNATIONAL SEARCH REPORT

International Application No PCT/SU89/00304

## I. CLASSIFICATION OF SUBJECT MATTER (if several classification symbols apply, indicate all) *

According to International Patent Classification (IPC) or to both National Classification and IPC

| | |
|---|---|
| Int.Cl.5 | G01C 21/24; B64G 1/40 |

## II. FIELDS SEARCHED

### Minimum Documentation Searched [7]

| Classification System | Classification Symbols |
|---|---|
| Int.Cl.5 | G01C 21/00; G01C 21/24; B64G 1/40 |

Documentation Searched other than Minimum Documentation
to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No [13] |
|---|---|---|
| A | US, A, 4426052 (SOCIETE NATIONALE INDUSTRIELLE AEROSPATIALE) 17 January 1984 (17.01.84); figure 1; column 3, lines 46-68; column 4, lines 28-45; column 5, lines 8-28 | 1 |
| A | "AD ASTRA HIPPARCOS", ESA BR-24, June 1985; EUROPEAN SPACE AGENCY (PARIS); figure 1; (cited in the description) | 1 |
| A | US, A, 4614319 (KIM. E.DREXLER) 30 September 1986, (30.09.86); figure 2 | 1 |
| A | V. V. PODOBED et al:"Obschaya astrometria" 1982, Nauka (Moscow), pages 79-82 (cited in the description) | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 19 January 1990 (19.01.90) | 23 March 1990 (23.03.90) |

| International Searching Authority | Signature of Authorized Officer |
|---|---|
| ISA/SU | |

Form PCT/ISA/210 (second sheet) (January 1985)